# EUROPEAN PATENT APPLICATION

(11) **EP 2 320 643 A2**
(43) Date of publication of application: **11.05.2011**
(21) Application number: 10155528.2
(22) Date of filing: 04.03.2010
(51) Int. Cl.: H04N 5/44

(54) **Broadcasting receiving apparatus and control method of the same**

(30) Priority: 10.11.2009 KR 20090108297
(71) Applicant: SAMSUNG ELECTRONICS CO., LTD., Suwon-si, Gyeonggi-do (KR)
(72) Inventor: Kim, Min-seok, Gyeonggi-do (KR)
(74) Representative: Walaski, Jan Filip

(57) **Abstract**

Disclosed are a broadcasting receiving apparatus and a control method thereof. The broadcasting receiving apparatus includes: a signal receiving unit which receives a broadcasting signal; and a control unit which detects a channel including an event information table (EIT) for other channels from the received broadcasting signal and generates a channel map using an EIT included in the detected channel including the EIT for other channels. There is provided broadcasting receiving apparatus which is capable of generating a channel map quickly, and a control method thereof.

## Description

Methods and devices consistent with the present invention relate to a broadcasting receiving apparatus and a control method thereof, and more particularly, to a broadcasting receiving apparatus which is capable of searching channels, and a control method thereof.

In recent years, with the advent of digital broadcasting era, the number of channels viewable by users has risen up to 100 or more and trends to increase more and more as digital broadcastings including digital cable broadcastings, digital satellite broadcastings, digital terrestrial broadcastings and so on have been actively applied. Under such circumstances, the increasing number of channels extends time required for auto-channel search in broadcasting receiving apparatuses more than before, even up to 10 minutes or more.

Digital broadcasting information is being provided to different users according to different standards of different services in different areas. In addition, channel information contained in broadcasting signals is also different for different standards.

Accordingly, it is an aspect of the present invention to provide a broadcasting receiving apparatus which is capable of creating a channel map quickly, and a control method thereof.

Another aspect of the present invention is to provide a broadcasting receiving apparatus which is capable of searching channels using EIT information of a barker channel, and a control method thereof.

Still another aspect of the present invention is to provide a broadcasting receiving apparatus which is capable of increasing memory efficiency using EIT information, and a control method thereof.

Yet still another aspect of the present invention is to provide a broadcasting receiving apparatus which is capable of increasing reliability of a channel map using EIT information, and a control method thereof.

Additional aspects of the present invention will be set forth in part in the description which follows and, in part, will be obvious from the description, or may be learned by practice of the present invention.

The foregoing and/or other aspects of the present invention can be achieved by providing a broadcasting receiving apparatus including: a signal receiving unit which receives a broadcasting signal; and a control unit which detects a channel including an event information table (EIT) for other channels from the received broadcasting signal and generates a channel map using an EIT included in the detected channel including the EIT for other channels.

The control unit may detect a network information table (NIT) from the received broadcasting signal and detect the channel including the EIT for other channels using a linkage descriptor contained in the NIT.

The broadcasting receiving apparatus may further include a memory which stores EPG information on a broadcasting channel, the EPG information being contained in the EIT, and the control unit may adjust a memory area which stores the EPG information depending on the size of the EPG contained in the EIT.

The broadcasting receiving apparatus may further include a memory which stores the generated channel map, and, upon again detecting the channel including the EIT for other channels after generating the channel map, the control unit may update the stored channel map based on the again-detected channel including the EIT for other channels.

The control unit may disable a channel search ending function during the generation of the channel map.

Upon receiving a selection signal for auto-channel search from a user, the control unit may control the signal receiving unit to perform the auto-channel search, and, upon detecting the channel including the EIT for other channels during the auto-channel search, the control unit may generate a channel map using an EIT included in the detected channel including the EIT for other channels.

Upon detecting the channel including the EIT for other channels during the auto-channel search, the control unit may stop the auto-channel search.

The foregoing and/or other aspects of the present invention can be achieved by providing a control method of a broadcasting receiving apparatus, including: detecting a channel including an EIT for other channels from a received broadcasting signal; and generating a channel map using an EIT included in the detected channel including the EIT for other channels.

As described above, according to an aspect of the invention, there is provided a broadcasting receiving apparatus which is capable of creating a channel map quickly, and a control method thereof.

According to an aspect of the invention, there is provided a broadcasting receiving apparatus which is capable of searching channels using EIT information contained in a barker channel, and a control method thereof.

According to an aspect of the invention, there is provided a broadcasting receiving apparatus which is capable of increasing memory efficiency using EIT information, and a control method thereof.

According to an aspect of the invention, there is provided a broadcasting receiving apparatus which is capable of increasing reliability of a channel map using EIT information, and a control method thereof.

The above and/or other aspects of the present invention will become apparent and more readily appreciated from the following description of the exemplary embodiments, taken in conjunction with the accompanying drawings, in which:
FIG. 1 is a control block diagram of a broadcasting receiving apparatus according to one exemplary embodiment of the present invention;
FIG. 2 is a control flow chart for explaining a channel map of the broadcasting receiving apparatus of FIG. 1;
FIG. 3 is a control flow chart for explaining update of the channel map of the broadcasting receiving apparatus of FIG. 1;
FIG. 4 is a view showing a memory for explaining adjustment of capacity of memory areas of a broadcasting receiving apparatus according to another exemplary embodiment of the present invention; and
FIG. 5 is a control flow chart for explaining adjustment of capacity of the memory areas shown in FIG. 4.

Reference will now be made in detail to the embodiments of the present invention, examples of which are illustrated in the accompanying drawings, so that those in the art can easily practice the present invention. The present invention is not limited to exemplary embodiment disclosed herein but may be implemented in different forms. In the following embodiments, for the purpose of clarity, the same components are denoted by the same reference numerals throughout the drawings, and explanation thereof will be representatively given in a first embodiment but will be omitted in other embodiments.

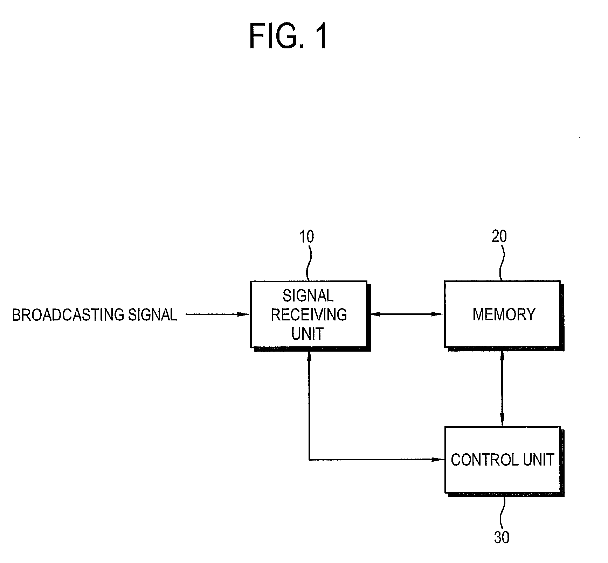

FIG. 1 is a control block diagram of a broadcasting receiving apparatus according to one exemplary embodiment of the present invention.

As shown in FIG. 1, a broadcasting receiving apparatus includes a signal receiving unit 10, a memory 20 and a control unit 30 which controls the signal receiving unit 10 and the memory 20. The broadcasting receiving apparatus may include a set-top box, a television or the like. The broadcasting apparatus may further include a signal processing unit (not shown) which processes received broadcasting signals and a display unit (not shown) which display the processed broadcasting signals. The signal receiving unit 10 may include an antenna which receives the broadcasting signal, a wired cable and a tuner. The signal receiving unit 10 may further include a known component which parses channel information from the received broadcasting signals and separates an image signal, an audio signal and a data signal from the broadcasting signals.

The memory 20 stores a created channel map under control of the control unit 30. Typically, the memory 20 is divided into a plurality of areas based on data stored therein. For example, the memory 20 may be partitioned into an area of several bytes which stores a channel search result, an area of several bytes which stores the created channel map, an area of several bytes which stores EPG information, etc., particular data are stored in their respective preset areas under control of the control unit 30.

The control unit 30 detects a channel including an event information table (EIT) for other channels of the received broadcasting signal, and generates the channel map using the channel information in the EIT included in the detected channel.

Typically, an auto-channel search has to be performed in order to generate the channel map. The auto-channel search refers to tuning all channels and searching a channel in which a broadcasting signal is received and is typically performed by the signal receiving unit 10 when the broadcasting receiving apparatus is initially used. Typically, the auto-channel search is performed in a full-range search manner. A full-range search refers to tuning the entire frequency range receivable by the broadcasting receiving apparatus every frequency interval and searching a channel in which a broadcasting signal is received. However, the full-range search tuning the entire frequency range consumes long time for the auto-channel search.

In the meantime, digital broadcasting transmits information on each channel of a broadcasting transmission stream according to various communication standards. Such information is transmitted to the broadcasting receiving apparatus through various kinds of tables. EIT is one of such tables. EIT may contain a titles of programs and information on the programs which are currently being serviced through a corresponding channel, EPG information as guide data, program start and end information, image and audio information and so on.

In this embodiment, the control unit 30 detects a channel containing not only its own EIT but also EIT of other channels of the received broadcasting signal and generates a channel map using the EIT contained in the detected channel without performing a typical channel search. According to current digital broadcasting standards in Europe, there exists a barker channel which provides EIT for other channels in order to obtain information related to programs serviced for the other channels. The control unit 30 can detect the barker channel and then generate a channel map quickly using the EIT contained in the barker channel without performing the full-range search. When a channel is searched using the EIT for other channels, since it can be known what frequency a broadcasting signal is received at, that is, information on a channel in which the broadcasting signal is received can be easily obtained, it is possible to reduce time spent by the full-range search.

Although the control unit 30 may parse information received from all channels in order to detect a channel containing EIT for other channels, the control unit 30 may detect the channel containing the EIT for other channels through another table which is called "network information table (NIT)." NIT refers to a table used to transmit information on a broadcasting network configuration, for example, a channel frequency, a transmission system, a modulation scheme and so on.

Information on a barker channel is contained in a linkage descriptor of NIT. Upon receiving NIT while tuning a broadcasting signal, the control unit 30 can parse the NIT to obtain the information on the barker channel. As one of channel search schemes, there is an NIT scan scheme which selectively searches only a channel contained in NIT. The control unit 30 can use the NIT scan scheme to detect the barker channel without searching other channels. The control unit 30 can obtain information on other channels by tuning the barker channel which contains EIT, and generate a channel map based on the obtained channel information. The control unit 30 stores a result of the search, i.e., the channel map, in the memory 20. Of course, upon receiving a selection signal to select an auto-channel search for generating a channel map from a user, the control unit 30 controls the signal receiving unit 10 to perform the auto-channel search. If a channel containing EIT for other channels is detected during the auto-channel search, the control unit 30 may stop the auto-channel search and generate a channel map using the EIT contained in the detected channel.

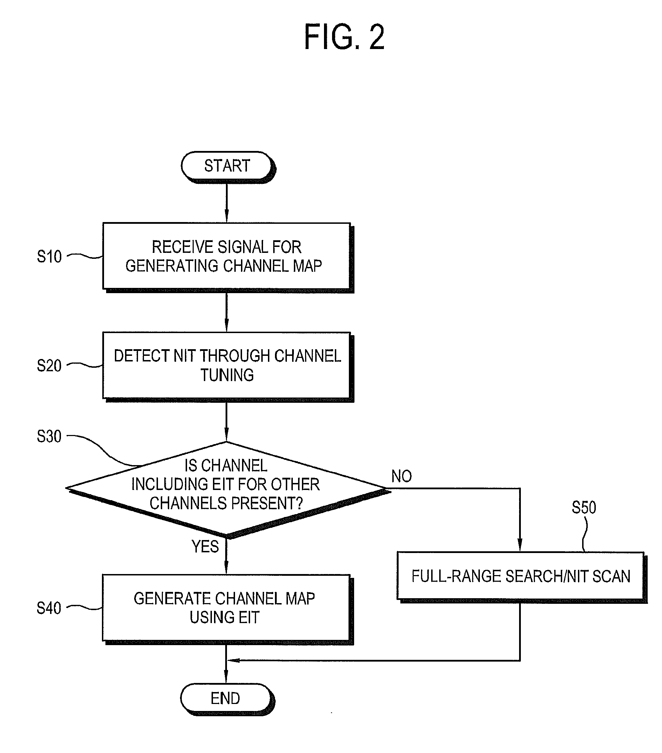

FIG. 2 is a control flow chart for explaining generation of a channel map of the broadcasting receiving apparatus of FIG. 1. Hereinafter, a channel map generating process according to this embodiment will be described in detail with reference to FIG. 2.

First, a signal for channel map generation is received from a user (S10).

The control unit 30 detects NIT through channel tuning (S20) and determines whether or not the detected NIT contains information on a channel containing not only its own EIT and but also EIT for other channels (S30). Of course, the control unit 30 may detect a channel containing EIT through a full-range search.

If it is determined that the NIT contains the information on the channel containing the EIT for other channels, the control unit 30 uses an NIT scan scheme to tune the corresponding channel, i.e., a barker channel, and generates a channel map by using the EIT for other channels which is contained in the barker channel (S40).

If it is determined that the NIT does not contain the information on the channel containing the EIT for other channels, the control unit 30 performs a typical full-range search or NIT scan (S50).

The broadcasting receiving apparatus may further include a user selecting unit (not shown). The user selecting unit corresponds to a user interface which selects a channel or generation of a channel map and may include a channel selection button provided in a remote controller or a housing of the broadcasting receiving apparatus, or any input devices known in the art, such as a touch panel.

In an alternative exemplary embodiment, the control unit 30 may disable a channel search ending function during channel map generation. If time taken for the channel map generation increases with increase in the number of tunable channels, the user may stop the channel search before the channel search has been completed. In a case of digital broadcasting providing information on the barker channel, although the channel search is stopped, information on channels continues to be updated by the barker channel. That is, although the channel search is stopped by the user, information on the remaining channels may be automatically stored. The user may understand an unintended service (search for the remaining channels) to be an error of the broadcasting receiving apparatus and may be confused about the function of the broadcasting receiving apparatus. Accordingly, upon detecting the barker channel containing EIT for other channels, the control unit 30 may disable the channel search ending function during the channel search for channel map generation.

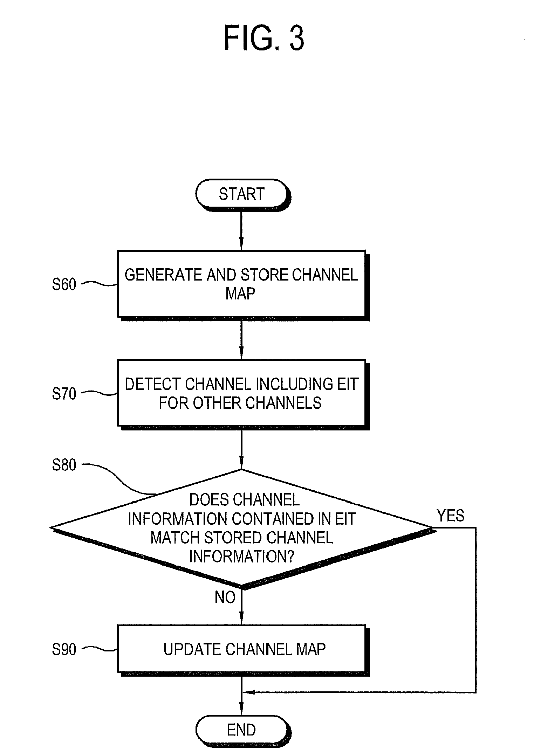

FIG. 3 is a control flow chart for explaining update of the channel map of the broadcasting receiving apparatus of FIG. 1. As described above, the barker channel contains broadcasting information on the entire serviced channels. The control unit 30 may update the previously stored channel map and broadcasting information through the barker channel.

First, the control unit 30 generates a channel map and stores the channel map in the memory 20 (S60).

Next, a channel including EIT for other channels is detected (S70), and then, the control unit 30 determines whether or not channel information contained in the channel including EIT for other channel matches channel information of the stored channel map (S80).

If it is determined that the channel information contained in the channel including EIT for other channel does not match the stored channel information, the control unit 30 updates the stored channel map based on the channel information contained in the channel including EIT for other channels (S90). In addition to the channel information, EPG may be also updated.

If it is determined that the channel information contained in the channel including EIT for other channel matches the stored channel information, the control unit 30 tunes the channel according to the stored channel map.

It is apparent to those skilled in the art that the channel map can be updated as shown in FIG. 3 even if the first channel search is performed based on a full-range search, not EIT of the barker channel.

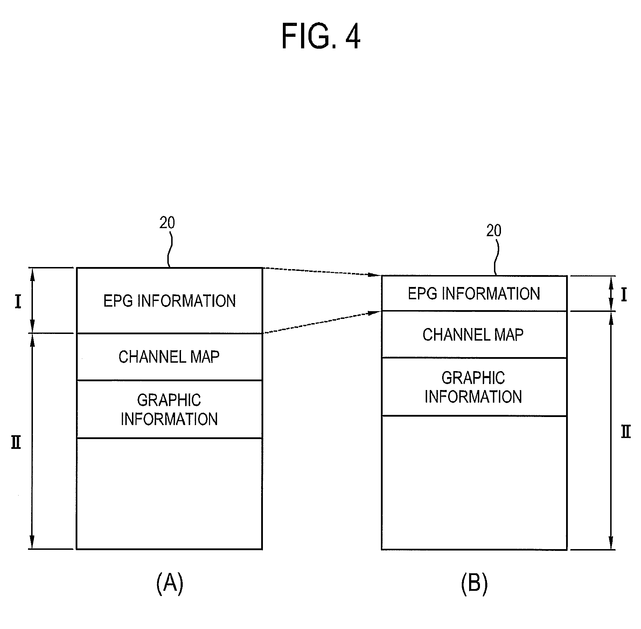

FIG. 4 is a view for explaining adjustment of capacity of memory areas of a broadcasting receiving apparatus according to another exemplary embodiment of the present invention. In this embodiment, the broadcasting receiving apparatus may include the signal receiving unit 10, the memory 20 and the control unit 30 shown in FIG. 1, and therefore, explanation of overlapping elements will be omitted.

As shown in FIG. 4, the memory 20 includes a first memory area I which stores EPG information and a second memory area II different from the first memory area I. The memory 20 may preferably be a readable/writable volatile memory. EIT contains EPG information on broadcasting channels and the EPG information is stored in the first memory area I of the memory 20. A channel map or graphic information such as on-screen display (OSD) or the like may be stored in the second memory area II. Since the EPG information is dependent on a broadcasting program, the size of the EPG information may be varied depending on contents of the broadcasting program and the amount of information sent from a broadcasting station.

The control unit 30 may determine data whose size is variable, such as EPG information, through EIT, and adjusts a memory area storing the data based on a result of the determination. Typically, since a memory is assigned with areas which store data and these memory areas are fixed during manufacture of products, it is almost impossible to modify these memory areas later. However, in this embodiment, the control unit 30 may assign the first memory area I of the memory 20 in correspondence to the size of the EPG information to be stored and store other data in the second memory area II. That is, the control unit 30 adjusts the memory area storing the EPG information depending on the size of the EPG information.

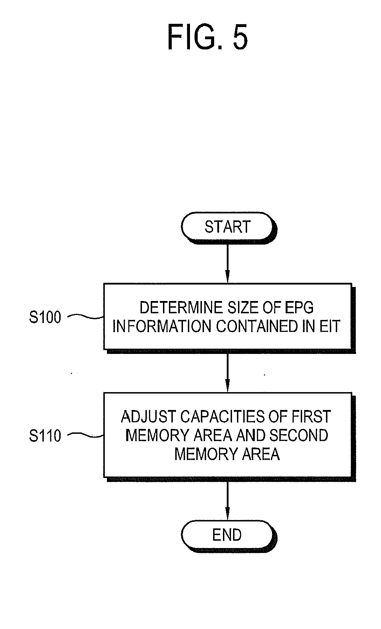

As shown in FIG. 4, the capacity of the first memory area I assigned for the EPG information may be changed by the control unit 30 from <A> to <B>. The capacity of the first memory area I may be increased or decreased depending on the size of the EPG information. The maximum of first memory area I will be set as a space in which typically received EPG information can be sufficiently stored. The control unit 30 may increase the utilization of the second memory area II by adjusting the size of the first memory area I depending on the size of the EPG information contained in EIT. That is, the control unit 30 may increase efficiency of the memory 20 by freely controlling spaces within the memory in which data are stored. Assignment of areas of the memory 20 may be controlled by the control unit which controls channels or may be performed by a separate memory controller. FIG. 5 is a control flow chart for explaining adjustment of capacity of the memory areas shown in FIG. 4. First, the control unit 30 detects the size of EPG information contained in EIT (S100). Although the EPG information is illustrated as data with variable size in this embodiment, information contained in EIT is not limited to the EPG information but may be channel information or table information as long as the size of data to be stored is variable.

The control unit 30 adjusts the capacity of the first memory area I in which the EPG information is stored and the capacity of the second memory area II in which other data are stored.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A broadcasting receiving apparatus comprising:
a signal receiving unit which receives a broadcasting signal; and
a control unit which detects a channel including an event information table (EIT) for other channels from the received broadcasting signal and generates a channel map using the EIT included in the detected channel including the EIT for other channels.

2. The broadcasting receiving apparatus according to claim 1, wherein the control unit detects a network information table (NIT) from the received broadcasting signal and detects the channel including the EIT for other channels using a linkage descriptor contained in the NIT.

3. The broadcasting receiving apparatus according to claim 1, further comprising a memory which stores EPG information on a broadcasting channel, the EPG information being contained in the EIT, wherein the control unit adjusts a memory area which stores the EPG information depending on the size of the EPG contained in the EIT.

4. The broadcasting receiving apparatus according to claim 1, further comprising a memory which stores the generated channel map, wherein, if again detecting the channel including the EIT for other channels after generating the channel map, the control unit updates the stored channel map based on the again-detected channel including the EIT for other channels.

5. The broadcasting receiving apparatus according to claim 1, wherein the control unit disables a channel search ending function during the generation of the channel map.

6. The broadcasting receiving apparatus according to claim 1, wherein, if receiving a selection signal for auto-channel search from a user, the control unit controls the signal receiving unit to perform the auto-channel search, and wherein, if detecting the channel including the EIT for other channels during the auto-channel search, the control unit generates a channel map using an EIT included in the detected channel including the EIT for other channels.

7. The broadcasting receiving apparatus according to claim 6, wherein, if detecting the channel including the EIT for other channels during the auto-channel search, the control unit stops the auto-channel search.

8. A control method of a broadcasting receiving apparatus, comprising:
detecting a channel including an EIT for other channels from a received broadcasting signal; and
generating a channel map using the EIT included in the detected channel including the EIT for other channels.

9. The control method according to claim 8, wherein the detecting a channel including an EIT for other channels includes:
detecting a NIT from the received broadcasting signal; and
determining whether the channel including the EIT for other channels is present using a linkage descriptor contained in the NIT.

10. The control method according to claim 8, wherein the EIT contains EPG information on a broadcasting channel and the broadcasting receiving apparatus comprisies a memory which stores the EPG information, the control method further comprising:
determining the size of the EPG information contained in the EIT;
adjusting a memory area which stores the EPG information based on a result of the determination.

11. The control method according to claim 8, further comprising:
storing the generated channel map;
again detecting the channel including the EIT for other channels; and
updating the stored channel map based on the again-detected channel including the EIT for other channels.

12. The control method according to claim 8, further comprising: disabling a channel search ending function during the generation of the channel map.

13. The control method according to claim 8, further comprising:
receiving a selection signal for auto-channel search from a user; and
performing an auto-channel search based on the selection signal,
wherein the generating a channel map includes, if the channel including the EIT for other channels is detected during the auto-channel search, generating a channel map using an EIT included in the detected channel including the EIT for other channels.

14. The control method according to claim 13, further comprising:
if the channel including the EIT for other channels is detected during the auto-channel search, stopping the auto-channel search.
